# DEMANDE DE BREVET EUROPEEN

(11) **EP 4 298 889 A1**
(43) Date de publication de la demande: **03.01.2024**
(21) Numéro de dépôt: 23182143.0
(22) Date de dépôt: 28.06.2023
(51) Int. Cl.: A01D 45/06, A01D 89/00, G06N 3/02

(54) **ENGIN DE TRAITEMENT D'AU MOINS UN ANDAIN**

(30) Priorité: 29.06.2022 FR 2206547
(71) Demandeur: N.V. Depoortere, 8791 Beveren-Leie (BE)
(72) Inventeur: DEPOORTERE, Rik, 8908 VLAMERTINGE (BE); WOLFCARIUS, Nico, 8720 WAKKEN (BE)
(74) Mandataire: Cabinet Beau de Loménie

(57) **Abrégé**

L'invention concerne un engin (1), automoteur ou tracté, de traitement d'au moins un andain, de type comprenant au moins un moyen de ramassage (3) apte à prélever ledit au moins un andain sur le sol sous forme de nappe continue. Ledit engin comprend au moins un châssis (91) permettant le support du moyen de ramassage, le moyen de ramassage (3) étant monté mobile sur le châssis. Le moyen de ramassage est un moyen de ramassage commandé, et l'engin comporte un moyen d'actionnement (2) configuré pour déplacer, en particulier orienter, le moyen de ramassage commandé par rapport au châssis.

L'engin comporte en particulier au moins un premier capteur configuré pour déterminer la position dudit au moins un andain avant, pendant et/ou après son ramassage par ledit engin (1). L'engin comporte également des moyens de commande configurés pour recevoir des données dudit au moins un premier capteur, et pour commander ledit moyen d'actionnement (2) dudit moyen de ramassage (3) commandé en fonction de ladite position dudit au moins un andain fournie par ledit au moins un premier capteur, de manière à ajuster la position relative du moyen de ramassage commandé par rapport audit andain.

## Description

### Domaine Technique

La présente invention concerne un engin, tracté ou automoteur, de traitement de tiges végétales, notamment de lin, se présentant sous la forme d'andains qui sont laissés sur le champ après la récolte. La présente invention sera notamment mise en oeuvre par les fabricants de matériels agricoles et trouvera son application dans le domaine de l'agriculture.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

La dégradation biologique dépend des conditions d'humidité et d'ensoleillement auxquelles sont soumises les tiges. On comprend que ces conditions peuvent varier selon que la partie de tige est tournée vers le sol ou vers le ciel. C'est pourquoi on procède en cours de rouissage à une opération consistant à retourner l'andain sur le champ.

Cette opération dite de retournage est réalisée par un engin, automoteur ou tracté qui comporte des moyens de ramassage, aptes à prélever l'andain du sol sous forme d'une nappe continue, des moyens de retournage aptes à retourner sur elle-même ladite nappe ramassée et des moyens d'étalage aptes à étaler sur le sol la nappe ainsi retournée. Un tel engin est par exemple décrit dans le document FR.2.484.768.

Dans ce document, les moyens de ramassage comprennent un dispositif, couramment dénommé pick-up, qui est une sorte de cylindre muni de doigts métalliques rétractables qui sont en position sortie, vers le sol, pour ramasser les tiges, puis dans le demi-tour suivant, en position rétractée, pour que les tiges ainsi ramassées puissent être reprises, encore à l'état de nappe, par les moyens de retournage. Les moyens de retournage comprennent généralement une courroie croisée à picots, le croisement de ladite courroie permettant de faire décrire à l'andain une demi spirale réalisant le retournement de l'andain de telle sorte que les tiges initialement disposées sur le dessus de l'andain se retrouvent en dessous et réciproquement. Cette courroie à picots est tendue entre un cylindre avant et un cylindre arrière, le cylindre avant pouvant être associé au pick-up comme dans le document FR.2.484.768.

Le document FR 2 916 604 divulgue un engin comportant deux ensembles de ramassage, retournement et étalage d'andains sur le sol. En particulier, et afin de s'adapter à la disposition des andains l'un par rapport à l'autre sur le sol, un des deux ensembles peut être pivoté autour d'un axe vertical, tandis que l'autre reste solidaire du châssis de l'engin, c'est-à-dire dans l'axe de l'engin.

Cependant, l'étape de retournage n'est pas toujours satisfaisante, notamment lors de sa mise en oeuvre par l'opérateur manoeuvrant l'engin, car cela nécessite une bonne maîtrise de l'engin pour s'assurer de la prise correcte de l'andain sur le sol avant traitement et/ou de la dépose correcte de l'andain sur le sol après traitement. Par exemple, lorsque la prise de l'andain n'est pas correcte, la qualité de l'alignement au sol après retournage est perturbée, jusqu'à provoquer des bourrages nécessitant un arrêt de l'engin et une action manuelle pour libérer les tiges bloquées.

### Exposé de l'invention

La présente invention vise à résoudre les différents problèmes techniques énoncés précédemment. En particulier, la présente invention vise à proposer un engin facilitant et améliorant la prise des andains par les moyens de ramassage et/ou l'étalage des andains par les moyens d'étalage, afin d'obtenir un traitement amélioré. Plus précisément, la présente invention vise à proposer un engin permettant d'aider l'opérateur à le commander correctement et facilement.

Ainsi, selon un aspect, il est proposé un engin, automoteur ou tracté, de traitement d'au moins un andain, de type comprenant au moins un moyen de ramassage apte à prélever ledit au moins un andain sur le sol sous forme de nappe continue. Ledit engin comprend au moins un châssis permettant le support du moyen de ramassage, le moyen de ramassage étant monté mobile sur le châssis, notamment en rotation par rapport à un axe, de préférence sensiblement vertical. Le moyen de ramassage est un moyen de ramassage commandé, et l'engin comporte un moyen d'actionnement, par exemple un moteur ou un vérin, configuré pour déplacer, en particulier orienter, le moyen de ramassage commandé par rapport au châssis.

L'engin comporte en particulier au moins un premier capteur, par exemple un premier ensemble de capteurs, configuré pour déterminer la position, de préférence dans un plan horizontal et notamment la position latérale ou par rapport à un andain adjacent, voire la présence, dudit au moins un andain avant, pendant et/ou après son ramassage par ledit engin. L'engin comporte également des moyens de commande configurés pour recevoir des données dudit au moins un premier capteur, et pour commander ledit moyen d'actionnement dudit moyen de ramassage commandé en fonction de ladite position, de préférence dans un plan horizontal et notamment la position latérale ou par rapport à un andain adjacent, voire de la présence, dudit au moins un andain fournie par ledit au moins un premier capteur, de manière à ajuster la position relative du moyen de ramassage commandé par rapport audit andain.

Ainsi, l'engin selon la présente invention est configuré pour commander un moyen de ramassage automatiquement en fonction de la position, de préférence dans un plan horizontal et notamment la position latérale ou par rapport à un andain adjacent, voire de la présence, de l'andain avant, pendant ou après son ramassage. En particulier, les moyens de commande viennent aider l'opérateur en venant directement commander la position/orientation du moyen de ramassage à la place de l'opérateur qui n'a donc plus qu'à se concentrer sur la trajectoire de l'engin dans le champ et éventuellement sur d'autres moyens de traitement, par exemple un autre moyen de ramassage ou bien un moyen d'étalage de l'andain après retournement, ou bien encore le réglage des moyens d'extractions, de battage et de nettoyage des graines de semences dans le cas d'une machine écapsuleuse.

Préférentiellement, le moyen de ramassage commandé est également monté mobile sur le châssis en rotation par rapport à un axe sensiblement horizontal. Le moyen d'actionnement est également configuré pour déplacer le moyen de ramassage commandé par rapport au châssis selon ledit axe sensiblement horizontal, de manière à permettre un relevage du moyen de ramassage commandé par rapport au sol, notamment en cas d'obstacle ou de désorganisation de l'andain, et les moyens de commande sont également configurés pour commander ledit moyen d'actionnement dudit moyen de ramassage commandé, afin d'ajuster la hauteur relative du moyen de ramassage commandé par rapport au sol.

Les moyens de commande sont ainsi configurés pour orienter automatiquement le moyen de ramassage, mais également pour relever le moyen de ramassage. Un tel relevage peut notamment avoir lieu en bout de champ, lorsque l'engin doit faire demi-tour pour poursuivre le ramassage de l'andain, ou bien encore en cas d'andain en désordre, par exemple suite à un coup de vent ou bien suite à une flaque d'eau. Dans de tels cas, les moyens de commande peuvent alors automatiquement relever le moyen de ramassage afin de ne pas ramasser les tiges végétales désordonnées, mais au contraire les laisser sur place. De même, les moyens de commande peuvent également être configurés pour ajuster la hauteur du moyen de ramassage en fonction de caractéristiques de l'andain, par exemple son épaisseur. On peut ainsi éviter d'augmenter la quantité de poussières soulevées lors du ramassage et pouvant polluer la qualité de l'andain.

Préférentiellement, les moyens de commande sont basés sur une intelligence artificielle et configurés pour déterminer la commande à fournir au moyen d'actionnement en fonction des données fournies par ledit au moins un premier capteur.

Afin de commander de manière précise et pertinente le moyen de ramassage, les moyens de commande peuvent comprendre une intelligence artificielle. L'avantage de l'utilisation d'une intelligence artificielle est la possibilité d'identifier de manière autonome et automatique, différentes situations pour effectuer ensuite les opérations adéquates. Par ailleurs, il est également possible, avec une intelligence artificielle, d'effectuer un apprentissage continu pour améliorer, au fil du temps, les performances dans les décisions prises par l'intelligence artificielle en fonction des situations.

Préférentiellement, les moyens de commande basés sur l'intelligence artificielle comprennent un modèle basé sur l'apprentissage machine, notamment entraîné ou automatique, et éventuellement des données utilisées pour l'apprentissage dudit modèle.

L'apprentissage permet d'améliorer continument les performances de l'intelligence artificielle, à savoir les décisions prises en fonction des situations détectées à partir des informations fournies par le premier capteur ou ensemble de capteurs. En particulier, l'apprentissage permet de corriger des erreurs effectuées par l'intelligence artificielle, afin d'éviter qu'elles ne soient reproduites dans le futur, ou bien permet d'anticiper certaines erreurs afin d'éviter qu'elles ne se produisent.

Préférentiellement, les moyens de commande basés sur l'intelligence artificielle comprennent un modèle d'analyse d'images, par exemple un système de réseau de neurones tel qu'un réseau neuronal convolutif.

Le ou les premiers capteurs de l'engin peuvent comprendre notamment des moyens d'acquisition d'images, en particulier des caméras. A partir des images fournies par le ou les caméras, l'intelligence artificielle doit alors être en mesure de déterminer la situation applicable pour en déduire les ordres à envoyer au moyen d'actionnement. Afin de pouvoir analyser de manière pertinente et efficace les données des caméras, l'intelligence artificielle peut comprendre un réseau de neurones, par exemple un réseau neuronal convolutif, qui est adapté à l'analyse de telles données.

Préférentiellement, ledit au moins un premier capteur comprend au moins un moyen d'acquisition de données, de préférence d'images, tel qu'une caméra, un scanner et/ou un radar, et/ou au moins un moyen de présence, tel qu'un capteur mécanique ou optique, et/ou un moyen de positionnement, tel qu'une balise GPS.

Le premier capteur peut donc comprendre un ou plusieurs moyens d'acquisition de données, que ce soit sous forme d'images ou bien de signaux. En particulier, les moyens d'acquisition de données sont choisis de manière à fournir les données pertinentes permettant à l'intelligence artificielle de pouvoir commander correctement le moyen d'actionnement. Il peut ainsi s'agir de caméras, mais également de capteurs de position, tels qu'une balise GPS, ou autres capteurs de présence et/ou des capteurs de couple, de vitesses...

Préférentiellement, les moyens de commande sont également configurés : pour recevoir des données de l'engin, telles que sa géolocalisation, sa vitesse de déplacement, sa direction de déplacement, la position des moyens de ramassage et/ou des données d'un précédent traitement de l'engin ; et pour commander ledit moyen d'actionnement en fonction desdites données de l'engin.

Afin de déterminer les signaux de commande à envoyer au moyen d'actionnement, les moyens de commandes peuvent également s'appuyer sur des données liées au fonctionnement, et en particulier au déplacement, de l'engin. Ainsi, les moyens de commande peuvent également recevoir des données de localisation, de déplacement, de vitesse, etc., afin de déterminer de manière adéquate et précise les signaux de commande à envoyer au moyen d'actionnement. Par ailleurs, les moyens de commande peuvent également s'appuyer sur des données enregistrées des précédents passages de l'engin sur la zone de travail en cours et, le cas échéant, réutiliser les données enregistrées lors desdits précédents passages, afin d'adapter en conséquence les consignes envoyées au moyen d'actionnement.

Préférentiellement, l'engin comprend également un deuxième moyen de ramassage commandé, le deuxième moyen de ramassage commandé étant monté mobile sur le châssis, notamment en rotation par rapport à un axe, de préférence sensiblement vertical, et un deuxième moyen d'actionnement, par exemple un moteur ou un vérin, configuré pour déplacer, en particulier orienter, le deuxième moyen de ramassage commandé par rapport au châssis. Ledit au moins un premier capteur est configuré pour déterminer la position, de préférence dans un plan horizontal et notamment la position latérale ou par rapport au premier andain, voire la présence, d'un deuxième andain avant, pendant et/ou après son ramassage par ledit engin, et lesdits moyens de commande sont configurés pour recevoir les données dudit au moins un premier capteur, et pour commander ledit deuxième moyen d'actionnement en fonction de la position, de préférence dans un plan horizontal et notamment la position latérale ou par rapport au premier andain, voire de la présence, dudit deuxième andain fournie par ledit au moins un premier capteur, de manière à ajuster la position relative du deuxième moyen de ramassage commandé par rapport au deuxième andain correspondant.

Dans ce mode de réalisation, l'engin comporte deux moyens de ramassage montés mobiles. Les moyens de commande sont alors configurés pour déterminer les positions à obtenir pour chacun des deux moyens de ramassage, et pour commander les moyens d'actionnement correspondants afin de positionner correctement les deux moyens de ramassage par rapport aux andains notamment. L'opérateur de l'engin n'a alors plus qu'à s'occuper de conduire l'engin, les moyens de commande déterminant et commandant de manière autonome et automatique la position des moyens de ramassage.

Préférentiellement, lesdits deux moyens de ramassage commandés sont indépendants l'un de l'autre, notamment en position.

Les moyens de ramassage étant commandés et positionnés de manière individuelle par les moyens de commande, ceux-ci peuvent alors être indépendants l'un de l'autre, notamment en position, afin d'avoir encore plus de libertés pour les positionner, notamment selon l'environnement et la répartition de chaque andain sur le sol.

Préférentiellement, lesdits deux moyens de ramassage commandés comprennent chacun un bras muni d'une roue de ramassage montée à l'extrémité du bras pour prélever l'andain.

Une telle roue de ramassage est communément appelée « roue de terrage », et permet de ramasser les tiges végétales se trouvant à terre pour en permettre un traitement ultérieur (retournement, écapsulage, etc.).

Préférentiellement, l'engin comporte également des moyens de retournement et d'étalage montés en aval des moyens de ramassage, de manière à successivement ramasser, retourner et étaler les tiges végétales, lesdites opérations étant réalisées de manière continue pendant le déplacement de l'engin.

Le ramassage des andains peut avoir plusieurs finalités, que ce soit le retournement des tiges, la collecte des tiges ou bien encore la récupération des graines de semence présentes sur les tiges. Dans le cas présent, on considère le cas d'un engin de retournement d'andain, notamment pour l'étape de rouissage. Dans ce cas, l'engin comporte également, en aval des moyens de ramassage, dans le sens de déplacement des tiges végétales, des moyens de retournement puis des moyens d'étalage.

Préférentiellement, le moyen d'étalage est un moyen d'étalage commandé et est monté mobile sur le châssis, notamment en rotation par rapport à un axe, de préférence sensiblement vertical. L'engin comporte un moyen d'actionnement arrière, par exemple un moteur ou un vérin, configuré pour déplacer, en particulier orienter, le moyen d'étalage commandé par rapport au châssis. L'engin comporte au moins un deuxième capteur, par exemple un deuxième ensemble de capteurs, configuré pour déterminer la position, de préférence dans un plan horizontal et notamment la position latérale ou par rapport à un andain adjacent, dudit au moins un andain avant, pendant et/ou après son étalage par ledit engin, et les moyens de commande sont également configurés pour recevoir des données dudit au moins un deuxième capteur, et pour commander ledit moyen d'actionnement arrière dudit moyen d'étalage commandé en fonction de ladite position, de préférence dans un plan horizontal et notamment la position latérale ou par rapport à un andain adjacent, dudit au moins un andain fournie par ledit au moins un deuxième capteur, de manière à modifier la position de l'andain déposé sur le sol.

Les moyens de commande peuvent donc également être utilisés pour l'étalage des andains derrière l'engin. En particulier, afin de faciliter les traitements ultérieurs des andains, et notamment leur ramassage en vue d'un traitement, l'engin peut comporter un ou plusieurs, notamment deux, moyens d'étalage d'andain positionnés par un moyen d'actionnement. Les moyens de commande peuvent alors également commander la position du ou des moyens d'étalage afin d'obtenir en sortie d'engin, des andains orientés parallèlement entre eux et à égale distance. En particulier, afin de commander correctement le ou les moyens d'étalage, les moyens de commande peuvent s'appuyer sur les données fournies par au moins un deuxième capteur, par exemple par un deuxième ensemble de capteurs dont certains peuvent être communs avec le premier ensemble de capteurs. De tels moyens d'étalage commandés par les moyens de commande permettent ainsi d'obtenir des andains étalés par l'engin mieux disposés et répartis sur le sol, ce qui facilite le travail ultérieur de traitement à effectuer sur les andains.

Préférentiellement, l'engin comprend un deuxième moyen d'étalage commandé et un deuxième moyen d'actionnement arrière configuré pour déplacer, en particulier orienter, le deuxième moyen d'étalage commandé par rapport au châssis. Ledit au moins un deuxième capteur est configuré pour déterminer la position, de préférence dans un plan horizontal et notamment la position latérale, d'au moins deux andains avant, pendant et/ou après leur étalage par ledit engin, et lesdits moyens de commande sont configurés pour recevoir les données dudit au moins un deuxième capteur, et pour commander lesdits moyens d'actionnement arrières en fonction desdites positions, de préférence dans un plan horizontal et notamment les positions latérales, desdits au moins deux andains fournies par ledit au moins un deuxième capteur, de manière à modifier la position desdits andains déposés sur le sol.

Ainsi, les deux moyens d'étalage peuvent être indépendants l'un de l'autre, notamment en position. Les deux moyens d'étalage sont alors commandés et positionnés de manière autonome par les moyens de commande, afin d'avoir encore plus de libertés pour étaler les andains, notamment selon l'environnement et la répartition des andains précédents sur le sol.

### Brève description des dessins

[Fig. 1] La figure 1 représente un engin selon l'invention, avec deux ensembles de moyens de ramassage, de retournage et d'étalage d'andains dont un commandé;
[Fig. 2] La figure 2 représente, de manière schématique, l'ensemble commandé de l'engin illustré à la figure 1, vu de côté ;
[Fig. 3] La figure 3 représente, de manière schématique, l'ensemble commandé illustré à la figure 2, en position relevée ;
[Fig. 4] La figure 4 représente, de manière schématique, l'ensemble commandé illustré à la figure 2, vu de dessus ;
[Fig. 5] La figure 5 représente, de manière schématique, le système de commande de l'ensemble commandé illustré aux figures 2 à 4,
[Fig. 6] La figure 6 représente, de manière schématique, un engin selon un autre mode de réalisation de l'invention, avec deux moyens de ramassage commandés et deux moyens d'étalage commandés, et
[Fig. 7] La figure 7 représente, de manière schématique, le système de commande des moyens commandés de l'engin illustré à la figure 6.

### Description des modes de réalisation

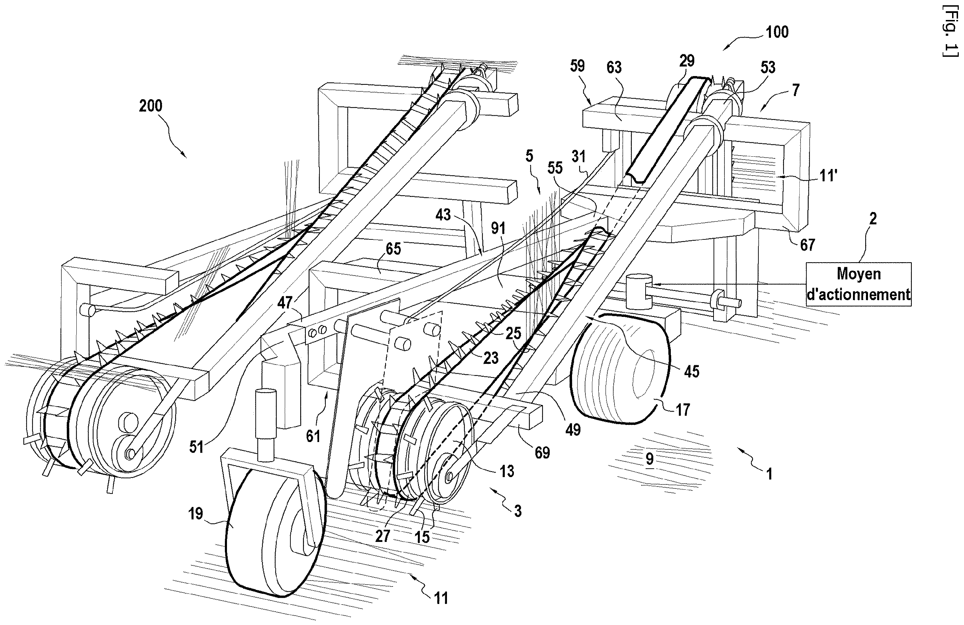

La figure 1 illustre de manière schématique un exemple d'engin 1 selon l'invention, avec un premier ensemble 100 et un deuxième ensemble 200 de moyens de ramassage, de retournage et d'étalage d'andains. Le premier ensemble 100 est commandé en position par un moyen d'actionnement 2.

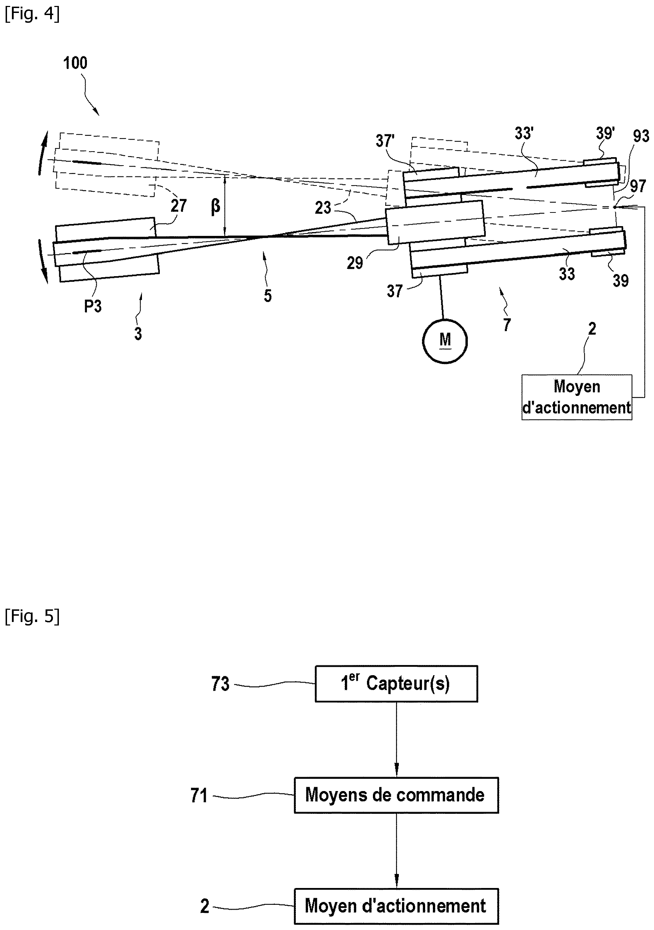

Dans l'exemple décrit, l'engin 1, automoteur ou tracté, est apte à réaliser le retournage de deux andains lors d'un même passage, ce qui permet de multiplier la cadence de travail par deux. Pour cela l'engin est équipé des deux ensembles 100, 200 monoblocs, dont seul le premier 100 sera décrit ci-dessous, comprenant chacun une structure porteuse, des moyens de ramassage, des moyens de retournage et des moyens d'étalage. Ces ensembles monoblocs 100, 200 sont montés à pivotement suivant des premiers moyens de pivotement selon un axe sensiblement horizontal 93 (voir figure 4) comme décrit plus en détails ci-dessous. Le deuxième ensemble 200 monobloc est équipé uniquement de moyens de pivotement sensiblement horizontal, mais est dépourvu de moyen de pivotement vertical. Le deuxième ensemble 200 est donc positionné, horizontalement, dans l'axe de l'engin 1 et, en particulier, présente une direction longitudinale horizontale solidaire de celle de l'engin 1 : le deuxième ensemble 200 peut ainsi être pivoté par rapport à la verticale par rotation de l'engin 1 lui-même, de sorte que, pour positionner correctement le deuxième ensemble 200 par rapport à l'andain correspondant, il est nécessaire de conduire l'engin 1 en conséquence.

Cependant, le retournage de deux andains simultanés lors d'un même passage de l'engin 1, nécessite de tenir compte des variations de positionnement entre les deux andains qui sont travaillés dans le même temps et qui ne sont pas toujours rigoureusement parallèles. En effet, l'écartement entre deux andains est variable, tout d'abord en fonction du type de machine ayant réalisé le fauchage ou l'arrachage et la dépose des nappes sur le sol, l'écartement entre les deux nappes pouvant varier selon l'engin de découpe utilisé, et ensuite du fait des variations du relief sur le sol 9. A cet effet, le premier ensemble 100 selon la présente invention, est monté à pivotement par rapport à un axe sensiblement vertical 97 (voir figure 4) qui est situé vers l'arrière de l'engin 1, sensiblement au niveau de la sortie des moyens d'étalage 7. En particulier, le pivotement du premier ensemble 100 autour de l'axe sensiblement vertical 97 est commandé et est réalisé par le moyen d'actionnement 2, par exemple un vérin ou un moteur. Afin de faciliter le positionnement correct du premier ensemble 100 par rapport à l'andain, notamment le moyen de ramassage, le pivotement du premier ensemble 100 est commandé automatiquement par des moyens de commande contrôlant le moyen d'actionnement 2, tel que cela sera décrit ci-dessous.

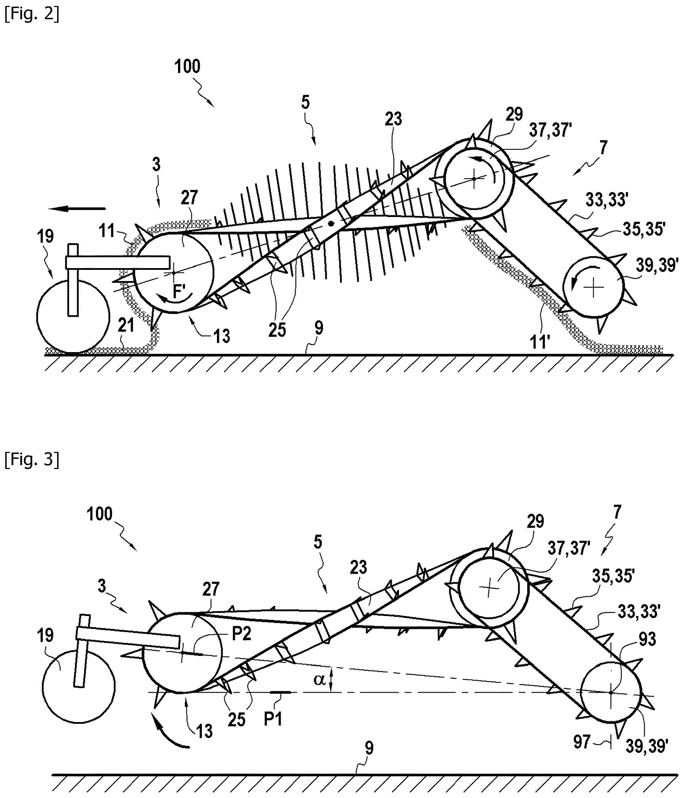

Tel qu'illustré sur les figures 1 et 2, le premier ensemble 100 comprend successivement, de l'avant vers l'arrière, un moyen de ramassage commandé 3, un moyen de retournage 5, et un moyen d'étalage 7. En mode d'utilisation normale, le moyen de ramassage 3, le moyen de retournage 5, et le moyen d'étalage 7, agencés sur la structure porteuse, forment un ensemble monobloc. En particulier, le moyen de ramassage 3 et le moyen d'étalage 7, qui font partie du premier ensemble 100 monobloc, sont qualifiés de « commandés » car leur position par rapport à l'engin 1 est déterminée par des moyens de commande commandant le moyen d'actionnement 2, afin de s'ajuster ou d'ajuster la position de l'andain avant ou après le passage de l'engin 1.

Le moyen de ramassage commandé 3 permet de prélever du sol 9 une nappe continue 11 de tiges constituant l'andain tel qu'illustré sur la figure 2. Le moyen de retournage 5 est apte à retourner sur elle-même ladite nappe continue 11, celle-ci effectuant une demi-spirale depuis son prélèvement à l'avant du moyen de ramassage commandé 3 jusqu'à l'arrière dudit moyen de retournage 5. Le moyen d'étalage commandé 7 est apte à étaler sur le sol 9 la nappe continue retournée 11'. L'ensemble de ces opérations de ramassage, de retournage et d'étalage est réalisé de manière continue pendant le déplacement de l'engin 1. Selon le mode préférentiel illustré, le moyen de ramassage commandé 3 comporte un pick-up 13 muni de doigts métalliques rétractables 15. Le pick- up 13 tourne sur lui-même dans le sens de la flèche F' contraire au sens de rotation des roues 17 de l'engin 1, de sorte que les doigts métalliques 15, venant en contact avec la nappe continue 11, soulèvent celle-ci et l'entraînent en rotation à la surface comme cela apparaît sur la figure 2. Le pick-up est précédé d'une roue 19 qui lors du déplacement de l'engin 1, vient s'appliquer sur la surface extérieure 21 de la nappe continue 11. Cette roue 19 est réglable en hauteur, et permet de maintenir constant l'écartement entre le pick-up 13 et la nappe continue 11 quelles que soient les irrégularités du sol 9. Selon l'exemple illustré, le moyen de retournage 5 est constitué par une courroie 23 munie de picots 25, qui est tendue entre un cylindre avant 27 et un cylindre arrière 29. Le cylindre avant 27 est associé au pick-up 13 de telle sorte que la nappe 11 prélevée par les doigts 15 du pick-up soit entraînée sur la courroie 23 par les picots 25. Cette courroie 23 est croisée entre le cylindre avant 27 et le cylindre arrière 29 de sorte que la nappe décrit entre les deux cylindres une demi-spirale au cours de son déplacement de l'avant vers l'arrière. Se faisant, les tiges initialement disposées au niveau du sol sur le dessus de la nappe se retrouvent en-dessous de celle-ci après le retournement et inversement. La courroie croisée présente un brin actif et un brin passif. On entend par brin actif, la partie de la courroie croisée transportant les tiges de lin depuis le cylindre avant 27 jusqu'au cylindre arrière 29 du moyen de retournage 5. Inversement, le brin passif correspond au retour de la courroie croisée à vide depuis le cylindre arrière 29 jusqu'au cylindre avant 27, les tiges de lin ayant été préalablement transférées vers le moyen d'étalage commandé 7. Par ailleurs, le moyen de retournage 5 comporte des éléments mécaniques tels que des fers ronds 31 permettant le support de la nappe 11 pendant son retournement, lorsque celle-ci n'est plus supportée par la courroie à picots. En effet, initialement, la nappe 11 soulevée est entraînée en rotation par les doigts métalliques 15 du pick-up 13, sont ensuite transportés et supportés par la courroie 23 jusqu'à ce que ladite nappe 11 se retourne, celle-ci étant alors supportée par les fers ronds 31, la courroie 23 à picots 25 permettant uniquement le transport de ladite nappe 11 jusqu'à l'arrière du moyen de retournage 5.

Le moyen d'étalage commandé 7 comprend, de manière préférentielle, un jeu de deux courroies parallèles 33, 33' munies de picots 35, 35'. Chaque courroie 33, 33' est montée tendue entre un cylindre avant 37, 37' et un cylindre arrière 39, 39'. Le cylindre avant 37, 37' est disposé dans le même axe que le cylindre arrière 27 du moyen de retournage 5. Le cylindre arrière 39, 39' est quant à lui disposé à proximité du sol 9 de manière à ce que la nappe retournée 11', entraînée par les picots 35, 35' qui pénètrent dans la nappe 11', soit étalée sur le sol 9 le plus proche possible de celui-ci de manière à éviter toute perturbation. Tout comme le moyen de retournage 5, le moyen d'étalage commandé 7 comporte également un élément mécanique notamment des fers ronds ou une plaque, permettant le support de la nappe retournée 11' lors de son transfert du cylindre avant 37, 37' jusqu'au cylindre arrière 39, 39'.

Tel qu'illustré sur les figures 1 et 2, l'engin 1 comprend au moins une structure porteuse 43 qui permet le support du moyen de ramassage commandé 3, du moyen de retournage 5 et du moyen d'étalage commandé 7. Cette structure porteuse 43 est agencée pour permettre le relevage desdits moyens par pivotement suivant un axe sensiblement horizontal, mais également le pivotement suivant un axe sensiblement vertical, tel qu'il sera décrit ci-après. Cette structure porteuse 43 comprend au moins deux bras 45, 47 qui s'étendent longitudinalement vers l'avant de l'engin 1. On entend par longitudinal le fait que les bras 45, 47 ont une direction sensiblement linéaire et perpendiculaire à l'axe de rotation du cylindre arrière 29 du moyen de retournage 5. Ces bras 45, 47 s'étendent sur une longueur correspondant sensiblement à celle du moyen de retournage 5, c'est-à-dire la distance séparant le cylindre avant 27 du cylindre arrière 29 entre lesquels est tendue la courroie croisée 23. Ces deux bras 45, 47 sont solidaires l'un de l'autre au niveau de leur extrémité avant 49, 51 et de leur extrémité arrière 53, 55. Les bras 45, 47 sont disposés à proximité l'un de l'autre de chaque côté de la courroie croisée 23, tels qu'illustrés sur la figure 2.

Telle qu'illustrée sur les figures 1 et 2, la structure porteuse comprend deux pièces 59, 61 de renforcement des bras 45, 47, permettant de rigidifier ladite structure 43. La première pièce 59 de renforcement est disposée à l'arrière des bras 45, 47, et la seconde pièce de renforcement est disposée à l'avant desdits bras. De manière préférentielle, ces deux pièces 59, 61 présentent la forme d'un C, ou éventuellement d'un C inversé telle qu'illustrée sur les figures 1 et 2. Ces deux pièces 59, 61 de renforcement présentent chacune une branche de support supérieure 63, 65 et une branche de support inférieure 67, 69. Le premier bras 45 est solidaire de la branche supérieure 63 de la pièce arrière 59 et solidaire de la branche inférieure 69 de la pièce avant 61. Inversement, le second bras 47 est solidaire de la branche inférieure 67 de la pièce arrière 59, et solidaire de la branche supérieure 65 de la pièce avant 61.

De manière préférentielle, les différents moyens 3, 5, 7 sont entraînés par un unique moyen d'entraînement, par exemple un moteur M, illustré sur la figure 4. Ce moteur est disposé au niveau du cylindre arrière 29 du moyen de retournage 5 et du cylindre avant 37, 37' du moyen d'étalage commandé 7, lesdits cylindres étant disposés suivant le même axe de rotation.

Tel qu'illustré sur la figure 1, l'engin 1 comprend un châssis 91 sur lequel est montée la structure porteuse 43. Cette structure porteuse 43 comprend des premiers moyens de pivotement sur le châssis 91 suivant un axe sensiblement horizontal 93, illustré sur les figures 3 et 4. Ainsi, l'ensemble monobloc 100, constitué par la structure porteuse 43, le moyen de ramassage commandé 3, le moyen de retournage 5 et le moyen d'étalage commandé 7, est monté à pivotement par rapport au châssis 91 suivant l'axe sensiblement horizontal 93. Ces premiers moyens de pivotement selon l'axe horizontal permettent notamment le relevage en position inactive de l'ensemble monobloc 95, permettant de lever le pick-up 13 et la roue 19 munie des moyens de réglage tel qu'illustré en figure 3, pour son déplacement sur la route par exemple. Ce pivotement selon l'axe sensiblement horizontal 93 permet également le suivi du relief du sol 9 en position active grâce à la roue 19 agencée à l'extrémité du moyen de ramassage commandé 3 à l'avant du second bras 47, cette roue permettant de maintenir un écartement constant entre le pick-up et la nappe quelles que soient les irrégularités du sol sur lequel elle est posée. Le passage de la position active de travail de l'engin 1 à la position inactive est obtenu par pivotement de l'ensemble monobloc 100 autour de l'axe sensiblement horizontal 93 de rotation, par rapport au châssis de l'engin 1. Selon l'exemple illustré à la figure 3, cet axe sensiblement horizontal 93 de rotation est, de préférence, confondu avec l'axe de rotation du cylindre arrière 39, 39' du moyen d'étalage commandé 7. On peut toutefois envisager une position de l'axe sensiblement horizontal 93 légèrement décalée vers l'avant par rapport à l'axe de rotation du cylindre arrière 39, 39'. On a représenté sur la figure 3 les plans passant par l'axe de rotation du cylindre avant du moyen de retournage 5 et l'axe de pivotement 93, correspondant aux axes de rotation des cylindres arrière 39, 39' du moyen d'étalage commandé 7, respectivement le plan P1 en position active de travail et le plan P2 en position inactive après pivotement vers le haut d'un angle alpha (α).

Tel que cela sera décrit ci-dessous, le pivotement du premier ensemble 100 autour de l'axe 93 peut également être effectué par le moyen d'actionnement 2, notamment afin de tenir compte de la qualité de l'andain présent dans le premier ensemble 100. Ainsi, en cas de désordre dans l'andain ou en cas de présence d'une plaque d'eau sur l'andain ou autre, le moyen d'actionnement 2 pourra actionner l'ensemble 100 de manière à le faire pivoter d'une position active à une position inactive durant le passage de l'andain désordonné ou recouvert d'eau, afin de ne pas le ramasser, puis pourra à nouveau actionner l'ensemble 100 de manière à le faire revenir à sa position active.

La figure 4 illustre plus spécifiquement le pivotement du premier ensemble 100 par rapport à l'axe sensiblement vertical 97. L'axe de pivotement sensiblement vertical 97 est disposé de manière médiane entre les courroies 33, 33' du moyen d'étalage commandé 7, au niveau de l'axe de rotation des cylindres arrière 39, 39'. Cet axe de pivotement sensiblement vertical 97 passe par le plan médian P3 des cylindres avant 27 et arrière 29 du moyen de retournage 5. Ainsi, ces seconds moyens de pivotement du premier ensemble 100 par rapport au deuxième ensemble monobloc 200 permettent de modifier la position du moyen de ramassage commandé 3 pour tenir compte des variations de l'écartement entre les deux andains. Par ailleurs, la position de l'axe de pivotement sensiblement vertical 97 à l'arrière de l'engin 1, au niveau des cylindres arrière 39, 39' du moyen d'étalage commandé 7, permet de limiter l'angle beta (β) de rotation du premier ensemble monobloc 100, et évite les variations de l'extrémité arrière du moyen d'étalage commandé 7, assurant ainsi une constance de l'écartement entre les deux nappes d'andains retournées et déposées sur le sol 9 en sortie du moyen d'étalage 7 sur les deux ensembles monoblocs 100, 200.

Dit autrement, le moyen d'actionnement 2 est configuré pour faire pivoter le premier ensemble 100 autour de l'axe sensiblement vertical 97, et éventuellement autour de l'axe sensiblement horizontal 93.

Afin d'améliorer le traitement des andains, tout en facilitant le travail de l'opérateur, l'engin 1 selon la présente invention comporte également, comme illustré sur la figure 5, des moyens de commande 71 configurés pour commander le moyen d'actionnement 2 du premier ensemble 100 afin de le positionner latéralement, et éventuellement en hauteur, selon la position, et éventuellement la qualité, de l'andain à ramasser.

Afin d'élaborer les signaux de commande envoyés au moyen d'actionnement 2, les moyens de commande 71 reçoivent des données relatives aux andains et à l'engin 1, notamment depuis un ou plusieurs premiers capteurs 73. Plus précisément, les moyens de commande 71 peuvent recevoir les données fournies par un premier capteur 73 ou par un ensemble de premiers capteurs 73. Le ou les premiers capteurs peuvent ainsi comprendre un moyen d'acquisition d'images, tel qu'une caméra, permettant de visualiser la position du ou des andains avant, et éventuellement pendant et/ou après, le passage de l'engin 1. De manière avantageuse, les moyens d'acquisition d'images peuvent permettre de visualiser à la fois le ou les andains, et le moyen de ramassage commandé 3, de manière à permettre aux moyens de commande 71, de déterminer la bonne commande à fournir au moyen d'actionnement 2 afin d'obtenir le positionnement correct du moyen de ramassage commandé 3 par rapport à l'andain correspondant.

Toutefois, le premier capteur 73 ne se limite pas à une caméra, mais peut en comprendre plusieurs, ainsi que d'autres capteurs, tels qu'un scanner, un radar, un moyen d'acquisition d'image en-dehors du visible, par exemple dans l'infrarouge ou dans l'ultra-violet. De tels capteurs, seuls ou en combinaison entre eux ou avec une caméra, peuvent permettre de déterminer au mieux les signaux à envoyer par les moyens de commande 71, en se basant sur des informations supplémentaires. Ainsi, de tels capteurs peuvent être utilisés pour identifier un obstacle, une flaque d'eau ou une désorganisation au niveau de l'andain, avant que celui-ci ne soit ramassé par le moyen de ramassage 3.

De même, l'ensemble de premiers capteurs 73 peut également comprendre un ou plusieurs moyens de présence, tels que des capteurs mécaniques ou optiques, et/ou un ou plusieurs moyens de positionnement, tels qu'une balise GPS. De tels capteurs peuvent notamment être utilisés pour déterminer l'état d'un élément de l'engin, par exemple si un des éléments de l'ensemble 100 vient en butée contre le châssis 91, ou bien pour déterminer la géolocalisation précise du pick-up 13 au cours des opérations de ramassage de l'andain, ce qui peut être utilisé, dans un second temps, par les moyens de commande 71, pour élaborer la consigne adéquate à envoyer au moyen d'actionnement 2.

Pour élaborer les consignes à envoyer au moyen d'actionnement 2, les moyens de commande 71 comprennent une intelligence artificielle. L'intelligence artificielle permet d'adapter les consignes fournies, en fonction de la situation, à partir d'informations d'apprentissage enregistrées dans l'intelligence artificielle au préalable. De tels moyens de commande 71 peuvent alors s'adapter en fonction des situations se présentant devant l'engin 1, afin de prendre la décision adéquate et de commander en conséquence le moyen d'actionnement 2.

Ainsi, l'intelligence artificielle des moyens de commande 71 peut comprendre un modèle basée sur l'apprentissage machine, notamment entraîné ou automatique, permettant d'améliorer les décisions prises par les moyens de commande 71. En particulier, l'apprentissage permet d'apprendre à l'intelligence artificielle à prendre de meilleures décisions, selon les situations, voire même à corriger des décisions préalablement prises par l'intelligence artificielle et nonadaptées à la situation in fine.

L'intelligence artificielle des moyens de commande 71 peut notamment comprendre un modèle d'analyse d'images, par exemple un système de réseau de neurones tel qu'un réseau neuronal convolutif. De tels modèles sont particulièrement adaptés à l'analyse d'images, et peuvent donc être particulièrement avantageux pour analyser les informations fournies par le premier capteur 73 lorsque celui-ci comprend une ou plusieurs caméras.

Par ailleurs, en plus des signaux fournis par le ou les premiers capteurs 73, les moyens de commande 71 peuvent également recevoir d'autres informations, notamment relatives à l'engin ou à des traitements antérieurs. Ainsi, les moyens de commande 71 peuvent recevoir les données de fonctionnement de l'engin 1, telles que sa géolocalisation, sa vitesse de déplacement en temps réel, sa direction en temps réel, etc. De telles informations peuvent alors être combinées à celles fournies par le ou les premiers capteurs 73, pour déterminer une consigne de commande pour le moyen d'actionnement 2. Par exemple, le premier capteur 73 peut fournir une information relative à une épaisseur faible d'andain devant le moyen de ramassage 3, tandis que l'engin 1 peut fournir aux moyens de commande 71 une vitesse de déplacement élevée, ce qui pourrait conduire à un soulèvement important de poussières et donc à une pollution de l'andain. Dans un tel cas, les moyens de commande 71 peuvent alors décider de relever partiellement ou totalement le moyen de ramassage 3, afin de limiter la poussière soulevée tant que l'épaisseur d'andain reste faible.

De même, les moyens de commande 71 peuvent également comprendre des données antérieures, correspondant à de précédents traitements de l'andain par un engin, ou par le même engin 1, afin d'ajuster également les consignes envoyées au moyen d'actionnement 2 en fonction des consignes élaborées lors du ou des précédents passages.

Selon une variante de l'engin 1 décrit ci-dessus et illustré à la figure 1, le deuxième ensemble 200 peut également comprendre un moyen d'actionnement commandé par les moyens de commande 71 afin d'être également positionné de manière indépendante de la direction de l'engin 1. Dans un tel mode de réalisation, l'orientation des deux ensembles 100, 200 est alors indépendante de la direction de déplacement de l'engin 1, et les deux ensembles 100, 200 sont également indépendants entre eux. Les moyens de commande 71 peuvent alors positionner spécifiquement chaque ensemble 100, 200, et notamment chaque moyen de ramassage 3, en fonction de informations reçues par les premiers capteurs 73 ou par l'engin 1. En particulier, le ou les premiers capteurs 73 peuvent être choisis de manière à fournir les informations nécessaires aux moyens de commande 71 pour déterminer les consignes du moyen d'actionnement de chaque ensemble 100, 200. L'opérateur de l'engin 1 n'a alors plus qu'à conduire et diriger l'engin 1 par rapport aux différents andains, sans se soucier de la commande de chaque ensemble qui est gérée par les moyens de commande 71.

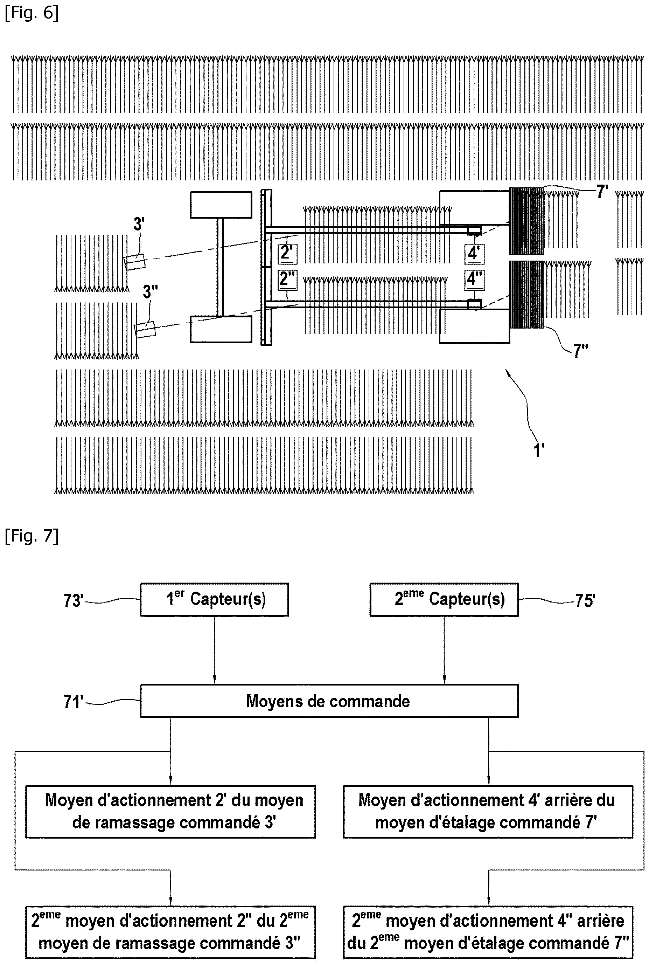

La figure 6 illustre un autre mode de réalisation de la présente invention. Sur la figure 6 est représenté un engin 1' dans lequel les moyens de ramassage, retournage et étalage ne forment plus des ensembles monoblocs orientables. Au contraire, l'engin 1' comprend deux moyens de ramassage 3', 3", associés à des moyens de retournage correspondants non-représentés, qui sont positionnés à l'avant de l'engin 1', et deux moyens d'étalage 7', 7" montés à l'arrière de l'engin 1'. Chaque moyen de ramassage 3', 3", et chaque moyen d'étalage 7', 7" est positionné individuellement et éventuellement indépendamment des autres moyens. Plus précisément, chaque moyen de ramassage ou d'étalage 3', 3", 7', 7" est monté mobile sur le châssis et peut être pivoté autour d'un axe sensiblement vertical, et éventuellement sensiblement horizontal, pour être correctement positionné en fonction des conditions particulières s'appliquant.

Ainsi, l'engin 1' comprend un moyen d'actionnement 2' configuré pour déplacer le moyen de ramassage 3', et un deuxième moyen d'actionnement 2" configuré pour déplacer le deuxième moyen de ramassage 2". De plus, l'engin 1' comprend un moyen d'actionnement arrière 4' configuré pour déplacer le moyen d'étalage 7', et un deuxième moyen d'actionnement arrière 4" configuré pour déplacer le deuxième moyen d'étalage 7".

Les moyens de commande 71' sont alors configurés pour commander les différents moyens d'actionnement 2', 2", 4', 4". Comme illustré sur la figure 7, les moyens de commande 71' peuvent recevoir des informations fournies par un ou plusieurs premiers capteurs, notamment en lien avec l'avant de l'engin 1' afin de commander les moyens de ramassage 3', 3", et des informations fournies par un ou plusieurs deuxièmes capteurs 75', notamment en lien avec l'arrière de l'engin 1' afin de commander les moyens d'étalage 7', 7". Cependant, l'invention n'est pas limitée à un tel mode de réalisation, et les premiers capteurs 73' et les deuxièmes capteurs 75' peuvent être, en tout ou partie, communs.

Dans l'engin 1', en plus du positionnement ajustable des deux moyens de ramassage 3', 3", les moyens d'étalage 7', 7" peuvent également être positionnés de manière individuelle afin d'obtenir, en sortie d'engin 1', des andains correctement positionnés pour les traitements ultérieurs. Ainsi, les moyens de commande 71' peuvent s'appuyer sur les positions des andains avant l'engin 1', pendant l'acheminement des tiges végétales dans l'engin 1' et sur les positions des andains précédemment étalés par l'engin 1', pour déterminer la consigne des moyens d'actionnement arrière 4', 4".

Ainsi, l'invention permet d'obtenir un engin avec un grand choix de commandes pour traiter les andains, sans pour autant obliger l'opérateur conduisant l'engin à gérer tous les paramètres en même temps et en continu. Grâce aux différents capteurs et à l'intelligence artificielle, il devient possible de commander automatiquement différents moyens de l'engin, notamment les moyens de ramassage et d'étalage, de manière optimisée et en continu, ce qui permet d'obtenir de meilleurs résultats de traitement tout en ayant un opérateur moins sollicité pendant la conduite de l'engin.

## Revendications

1. Engin (1, 1') automoteur ou tracté, de traitement d'au moins un andain, de type comprenant au moins un moyen de ramassage (3, 3', 3") apte à prélever ledit au moins un andain sur le sol sous forme de nappe continue, ledit engin (1, 1') comprenant au moins un châssis (91) permettant le support du moyen de ramassage, le moyen de ramassage (3, 3', 3") étant monté mobile sur le châssis, notamment en rotation par rapport à un axe (97), de préférence sensiblement vertical, **caractérisé en ce que** le moyen de ramassage (3, 3', 3") est un moyen de ramassage commandé, **en ce que** l'engin (1, 1') comporte un moyen d'actionnement (2, 2', 2"), par exemple un moteur ou un vérin, configuré pour déplacer, en particulier orienter, le moyen de ramassage commandé (3, 3', 3") par rapport au châssis (91), et **en ce que** l'engin (1, 1') comporte également :
- au moins un premier capteur (73, 73') configuré pour déterminer la position dudit au moins un andain avant, pendant et/ou après son ramassage par ledit engin, et
- des moyens de commande (71, 71') configurés pour recevoir des données dudit au moins un premier capteur (73, 73'), et pour commander ledit moyen d'actionnement (2, 2', 2") dudit moyen de ramassage commandé en fonction de ladite position dudit au moins un andain fournie par ledit au moins un premier capteur, de manière à ajuster la position relative du moyen de ramassage commandé (3, 3', 3") par rapport audit andain.

2. Engin (1, 1') selon la revendication 1, dans lequel le moyen de ramassage commandé (3, 3', 3") est également monté mobile sur le châssis (91) en rotation par rapport à un axe sensiblement horizontal (93), dans lequel le moyen d'actionnement (2, 2', 2") est également configuré pour déplacer le moyen de ramassage commandé (3, 3', 3") par rapport au châssis selon ledit axe sensiblement horizontal, de manière à permettre un relevage du moyen de ramassage commandé par rapport au sol, notamment cas d'obstacle ou de désorganisation de l'andain, et dans lequel les moyens de commande (71, 71') sont également configurés pour commander ledit moyen d'actionnement (2, 2', 2") dudit moyen de ramassage commandé, afin d'ajuster la hauteur relative du moyen de ramassage commandé (3, 3', 3") par rapport au sol.

3. Engin (1, 1') selon la revendication 1 ou 2, dans lequel les moyens de commande (71, 717) sont basés sur une intelligence artificielle et configurés pour déterminer la commande à fournir au moyen d'actionnement (2, 2', 2") en fonction des données fournies par ledit au moins un premier capteur (73, 73').

4. Engin (1, 1') selon la revendication 3, dans lequel les moyens de commande (71, 717) basés sur l'intelligence artificielle comprennent un modèle basé sur l'apprentissage machine, notamment entraîné ou automatique, et éventuellement des données utilisées pour l'apprentissage dudit modèle.

5. Engin (1, 1') selon la revendication 3 ou 4, dans lequel les moyens de commande (71, 71') basés sur l'intelligence artificielle comprennent un modèle d'analyse d'images, par exemple un système de réseau de neurones tel qu'un réseau neuronal convolutif.

6. Engin (1, 1') selon l'une quelconque des revendications précédentes, dans lequel ledit au moins un premier capteur (73, 73') comprend au moins un moyen d'acquisition de données, tel qu'une caméra, un scanner et/ou un radar, et/ou au moins un moyen de présence, tel qu'un capteur mécanique ou optique, et/ou un moyen de positionnement, tel qu'une balise GPS.

7. Engin (1, 1') selon l'une quelconque des revendications précédentes, dans lequel les moyens de commande (71, 717) sont également configurés pour recevoir des données de l'engin, telles que : sa géolocalisation, sa vitesse de déplacement, sa direction de déplacement, la position des moyens de ramassage et/ou des données d'un précédent traitement de l'engin (1, 1'), et pour commander ledit moyen d'actionnement en fonction desdites données de l'engin (1, 1').

8. Engin (1') selon l'une quelconque des revendications précédentes, comprenant : un deuxième moyen de ramassage commandé (3"), le deuxième moyen de ramassage commandé étant monté mobile sur le châssis, notamment en rotation par rapport à un axe, de préférence sensiblement vertical, et un deuxième moyen d'actionnement (2"), par exemple un moteur ou un vérin, configuré pour déplacer, en particulier orienter, le deuxième moyen de ramassage commandé (3") par rapport au châssis, dans lequel ledit au moins un premier capteur (73) est configuré pour déterminer la position d'un deuxième andain avant, pendant et/ou après son ramassage par ledit engin (1'), et lesdits moyens de commande (71') sont configurés pour recevoir les données dudit au moins un premier capteur (73'), et pour commander ledit deuxième moyen d'actionnement (2") en fonction de la position dudit deuxième andain fournie par ledit au moins un premier capteur (73'), de manière à ajuster la position relative du deuxième moyen de ramassage commandé (3") par rapport au deuxième andain correspondant.

9. Engin (1') selon la revendication précédente, dans lequel lesdits deux moyens de ramassage commandés (3', 3") sont indépendants l'un de l'autre, notamment en position.

10. Engin (1') selon la revendication 8 ou 9, dans lequel lesdits deux moyens de ramassage commandés (3', 3") comprennent chacun un bras muni d'une roue de ramassage montée à l'extrémité du bras pour prélever l'andain.

11. Engin (1, 1') selon l'une quelconque des revendications précédentes, comportant également des moyens de retournement et d'étalage (7, 7', 7") montés en aval des moyens de ramassage (3, 3', 3"), de manière à successivement ramasser, retourner et étaler les tiges végétales, lesdites opérations étant réalisées de manière continue pendant le déplacement de l'engin.

12. Engin (1') selon la revendication précédente, dans lequel le moyen d'étalage (7') est un moyen d'étalage commandé et est monté mobile sur le châssis, notamment en rotation par rapport à un axe, de préférence sensiblement vertical, dans lequel l'engin comporte un moyen d'actionnement arrière (4'), par exemple un moteur ou un vérin, configuré pour déplacer, en particulier orienter, le moyen d'étalage commandé (7') par rapport au châssis, dans lequel l'engin (1') comporte au moins un deuxième capteur (75') configuré pour déterminer la position dudit au moins un andain avant, pendant et/ou après son étalage par ledit engin, et dans lequel les moyens de commande (71') sont également configurés pour recevoir des données dudit au moins un deuxième capteur (75'), et pour commander ledit moyen d'actionnement arrière (4') dudit moyen d'étalage commandé (7') en fonction de ladite position dudit au moins un andain fournie par ledit au moins un deuxième capteur, de manière à modifier la position de l'andain déposé sur le sol.

13. Engin (1') selon la revendication précédente, comprenant un deuxième moyen d'étalage commandé (7") et un deuxième moyen d'actionnement arrière (4") configuré pour déplacer, en particulier orienter, le deuxième moyen d'étalage commandé (7") par rapport au châssis, dans lequel ledit au moins un deuxième capteur (75') est configuré pour déterminer la position d'au moins deux andains avant, pendant et/ou après leur étalage par ledit engin, et lesdits moyens de commande (71') sont configurés pour recevoir les données dudit au moins un deuxième capteur (75'), et pour commander lesdits moyens d'actionnement arrières (4', 4") en fonction desdites positions desdits au moins deux andains fournies par ledit au moins un deuxième capteur (75'), de manière à modifier la position desdits andains déposés sur le sol.
